(19)

**Europäisches Patentamt**
**European Patent Office**
**Office européen des brevets**

(11) **EP 4 507 018 A1**

(12) **EUROPEAN PATENT APPLICATION**
published in accordance with Art. 153(4) EPC

(43) Date of publication:
**12.02.2025 Bulletin 2025/07**

(21) Application number: **22961821.0**

(22) Date of filing: **14.10.2022**

(51) International Patent Classification (IPC):
**H01M 4/13** $^{(2010.01)}$     **H01M 10/0525** $^{(2010.01)}$

(52) Cooperative Patent Classification (CPC):
**H01M 4/13; H01M 10/0525; Y02E 60/10**

(86) International application number:
**PCT/CN2022/125523**

(87) International publication number:
**WO 2024/077635 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Central And Western District (HK)**

(72) Inventors:
• **HUANG, Lei**
  **Ningde, Fujian 352100 (CN)**
• **HAN, Changlong**
  **Ningde, Fujian 352100 (CN)**
• **WU, Zeli**
  **Ningde, Fujian 352100 (CN)**
• **ZHANG, Cuiping**
  **Ningde, Fujian 352100 (CN)**
• **DENG, Yilin**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **BATTERY CELL, BATTERY, AND ELECTRIC DEVICE**

(57)     The present application provides a battery cell, a battery, and an electrical apparatus, the battery cell comprising a positive electrode plate, a negative electrode plate, a separator, and an electrolyte solution. The positive electrode plate comprises a positive electrode current collector and a positive electrode active material layer arranged on at least one side of the positive electrode current collector. The negative electrode plate comprises a negative electrode current collector and a negative electrode active material layer arranged on at least one side of the negative electrode current collector. The separator is arranged between the positive electrode plate and the negative electrode plate. The positive electrode active material layer, the negative electrode active material layer, the separator, and the electrolyte solution satisfy a relationship of:

$$50 \, \text{M}\Omega \cdot \text{cm}^2 \leq \frac{\frac{T1}{P1} + \frac{T2}{P2} + \frac{T3}{P3}}{G} \leq 300$$

$\text{M}\Omega \cdot \text{cm}^2$. The battery cell can have both good rate performance and good power performance.

20

**FIG. 4**

**Description**

**Technical Field**

The present application relates to the technical field of batteries, and particularly relates to a battery cell, a battery, and an electrical apparatus.

**Background**

With the rapid development of battery technologies, batteries are widely used in electrical apparatuses, such as a vehicle. At present, requirements for the rate performance and power performance of the batteries are increasingly high on the market. However, in relevant technologies, the batteries fail to have both good rate performance and good power performance.

**Summary of the Invention**

The present application provides a battery cell, a battery, and an electrical apparatus. The battery cell can have both good rate performance and good power performance.

In a first aspect, an example of the present application provides a battery cell, comprising a positive electrode plate, a negative electrode plate, a separator, and an electrolyte solution. The positive electrode plate comprises a positive electrode current collector and a positive electrode active material layer arranged on at least one side of the positive electrode current collector. The negative electrode plate comprises a negative electrode current collector and a negative electrode active material layer arranged on at least one side of the negative electrode current collector. The separator is arranged between the positive electrode plate and the negative electrode plate. The positive electrode active material layer, the negative electrode active material layer, the separator, and the electrolyte solution satisfy a relationship of:

$$50 \text{ M}\Omega \cdot \text{cm}^2 \leq \frac{\frac{T1}{P1} + \frac{T2}{P2} + \frac{T3}{P3}}{G} \leq 300$$

M$\Omega \cdot$cm$^2$. Among them, T1 is a thickness of the positive electrode active material layer, in cm; and P1 is a porosity of the positive electrode active material layer. T2 is a thickness of the negative electrode active material layer, in cm; and P2 is a porosity of the negative electrode active material layer. T3 is a thickness of the separator, in cm; and P3 is a porosity of the separator. G is an ionic conductivity of the electrolyte solution at 25°C, in mS/cm.

In the battery cell provided in examples of the present application, the positive electrode active material layer, the negative electrode active material layer, the separator, and the electrolyte solution satisfy the above relationship, and can contribute to ion transmission within the battery cell, so that the battery cell has low resistance at a high rate, thereby improving the power performance of the battery cell, and realizing both good rate performance and good power performance of the battery cell.

In some examples of the present application, a thickness T1 of the positive electrode active material layer satisfies: 0.0035 cm$\leq$T1$\leq$0.0055 cm; and optionally 0.0035 cm$\leq$T1$\leq$0.0045 cm. The thickness T1 of the positive electrode active material layer set within the above appropriate range can shorten the ion transmission path within the positive electrode active material layer, to further reduce the resistance of the battery cell, thereby improving the power performance of the battery cell.

In some examples of the present application, a porosity P1 of the positive electrode active material layer satisfies: 30%$\leq$P1$\leq$60%; and optionally, 40%$\leq$P1$\leq$60%. The porosity P1 of the positive electrode active material layer set within the above appropriate range can contribute to the ion transmission within the positive electrode active material layer, to further reduce the resistance of the battery cell, thereby improving the power performance of the battery cell.

In some examples of the present application, the positive electrode active material layer comprises a positive electrode active material, and a BET specific surface area S1 of the positive electrode active material satisfies: 8 m$^2$/g$\leq$S1$\leq$12 m$^2$/g. The BET specific surface area S1 of the positive electrode active material set within the above appropriate range can increase the ion transmission rate in the positive electrode active material layer, thereby further improving the power performance of the battery cell.

In some examples of the present application, a thickness T2 of the negative electrode active material layer satisfies: 0.003 cm$\leq$T2$\leq$0.005 cm; and optionally 0.0035 cm$\leq$T2$\leq$0.005 cm. The thickness T2 of the negative electrode active material layer set within the above appropriate range can shorten the ion transmission path within the negative electrode active material layer, to further reduce the resistance of the battery cell, thereby improving the power performance of the battery cell.

In some examples of the present application, a porosity P2 of the negative electrode active material layer satisfies: 30%$\leq$P2$\leq$60%; and optionally, 40%$\leq$P2$\leq$60%. The porosity P2 of the negative electrode active material layer set within the above appropriate range can contribute to the ion transmission within the negative electrode active material layer, to further reduce the resistance of the battery cell, thereby improving the power performance of the battery cell.

In some examples of the present application, the negative electrode active material layer comprises a negative electrode active material, and a BET specific surface area S2 of the negative electrode active material satisfies: 1.7 $m^2/g \leq S2 \leq 2.2$ $m^2/g$. The BET specific surface area S2 of the negative electrode active material set within the above appropriate range can increase the ion transmission rate in the negative electrode active material layer, thereby further improving the power performance of the battery cell.

In some examples of the present application, a thickness T3 of the separator satisfies: $0.0005\,cm \leq T3 \leq 0.0015\,cm$. The thickness T3 of the separator set within the above range can shorten the ion transmission path within the separator, to further reduce the resistance of the battery cell, thereby providing the power performance thereof.

In some examples of the present application, a porosity P3 of the separator satisfies: $30\% \leq P3 \leq 80\%$. The porosity P3 of the separator set within the above range can contribute to the ion transmission, increase the ion transmission rate, and then reduce the ions of the battery cell, thereby improving the power performance of the battery cell.

In some examples of the present application, a gas permeability of the separator is greater than or equal to 150 $s/100\,cm^3$. The gas permeability of the separator set within the above range can contribute to the ion transmission, increase the ion transmission rate, and then reduce the resistance of the battery cell, thereby improving the power performance of the battery cell.

In some examples of the present application, an ionic conductivity G of the electrolyte solution at 25°C satisfies: $13\,mS/cm \leq G \leq 26\,mS/cm$; and optionally, $14\,mS/cm \leq G \leq 25\,mS/cm$. The ionic conductivity G of the electrolyte solution at 25°C set within the above appropriate range can enhance the ion conductivity within the electrolyte solution, and further reduce the resistance of the battery cell, thereby further improving the power performance of the battery cell.

In some examples of the present application, a liquid retention coefficient N of the electrolyte solution satisfies: 3 $g/Ah \leq N \leq 7$ $g/Ah$. The liquid retention coefficient N of the electrolyte solution set within the above range not only can reduce the resistance of the battery cell to improve the power performance of the battery cell, but also can improve the cycling performance of the battery cell.

In some examples of the present application, the electrolyte solution comprises an electrolyte salt and an organic compound, and a viscosity $\mu$ of the organic compound satisfies: $0.1\,mPa \cdot s$-$3.5\,mPa \cdot s$. An organic compound with the electrolyte salt comprised in and the viscosity $\mu$ of the electrolyte solution satisfying the above relationship makes the electrolyte solution have a high conductivity, and then can reduce the resistance of the battery cell, thereby further improving the power performance of the battery cell.

In some examples of the present application, based on a mass of the electrolyte solution, a mass fraction A of the electrolyte salt satisfies: $10\% \leq A \leq 20\%$, and a mass fraction B of the organic compound satisfies $30\% \leq B \leq 70\%$. The mass fraction A of the electrolyte salt and the mass fraction B of the organic compound set within the above appropriate range respectively can reduce the viscosity of the electrolyte solution, improve the conductivity of the electrolyte solution, and then reduce the resistance of the battery cell, thereby further improving the resistance of the battery cell.

In some examples of the present application, the electrolyte salt includes a lithium salt; and optionally, the lithium salt is selected from the group consisting of lithium hexafluorophosphate, lithium bis(fluorosulfonyl)imide, and lithium bis(trifluoromethanesulphonyl)imide, or a combination thereof.

In some examples of the present application, the organic compound with low viscosity comprises a sulfone organic compound, an ether organic compound, an ester organic compound, and a nitrile organic compound; optionally, the sulfone organic compound is selected from dimethyl sulfoxide; optionally, the ether organic compound is selected from glycol dimethyl ether; optionally, the ester organic compound is selected from the group consisting of methyl formate, ethyl formate, methyl acetate, ethyl acetate, methyl acrylate, or a combination thereof; and optionally, the nitrle organic compound is selected from acetonitrile.

In some examples of the present application, the electrolyte solution further comprises a high temperature additive, and based on the mass of the electrolyte solution, a mass fraction C of the high temperature additive satisfies: $0.01\% \leq C \leq 1\%$. The high temperature additive and the content thereof can contribute to forming a protective layer on a surface of an electrode plate, where the protective layer can be stable at a high temperature, and then contribute to protecting the electrode plate, so that the battery cell has good high temperature performance.

In some examples of the present application, the high temperature additive is selected from the group consisting of lithium tetrafluoroborate, lithium difluorophosphate, lithium fluorosulfonate, lithium sulphamate, or a combination thereof. The above high temperature additive can contribute to forming an inorganic protective layer to improve the mechanical strength of the protective layer, thereby further improving the high temperature performance of the battery.

In some examples of the present application, the electrolyte solution further comprises a film forming additive, and based on the mass of the electrolyte solution, a mass fraction D of the film forming additive satisfies: $1\% \leq D \leq 5\%$. The film forming additive and the content thereof can contribute to improving the interfacial film stability, thereby improving the cycling performance of the battery cell.

In some examples of the present application, the film forming additive is selected from the group consisting of vinylene carbonate, fluoroethylene carbonate, vinylethylene carbonate, or a combination thereof.

In a second aspect, an example of the present application provides a battery, comprising the battery cell according to any one example in the first aspect of the present application.

In a third aspect, an example of the present application provides an electrical apparatus, comprising the battery cell according to any one example in the first aspect of the present application or the battery according to any one example in the second aspect of the present application.

## Description of Drawings

To more clearly describe examples of the present application, drawings to be used in the examples of the present application will be briefly introduced below. Apparently, the drawings described below are merely some examples of the present application. For those of ordinary skills in the art, other drawings may also be obtained based on these drawings without making creative work.

Fig. 1 shows a schematic structural diagram of a vehicle provided in some examples of the present application;
Fig. 2 shows a schematic structural diagram of a battery pack provided in some examples of the present application;
Fig. 3 shows a schematic diagram of an exploded structure of the battery in Fig. 2;
Fig. 4 shows a schematic structural diagram of a battery cell provided in some examples of the present application; and
Fig. 5 shows a schematic diagram of an exploded structure of the battery cell in Fig. 4.

In the drawings, the figures are not drawn to the actual scale.

Description of reference numerals:

vehicle 1000;
battery 100, controller 200, motor 300;
box body 10, first box body 11, second box body 12;
battery cell 20; case 21; electrode assembly 22; cover body assembly 23.

## Detailed Description

Examples of the present application will be described in detail below with reference to the drawings. The following examples are merely used to more clearly describe the present application, and are therefore merely used as examples, but cannot be used to limit the scope of protection of the present application.

Unless otherwise defined, all technical and scientific terms used herein have the same meaning as commonly understood by those skilled in the technical field of the present application; the terms used herein are intended only for the purpose of describing specific examples, and are not intended to limit the present application; the terms "comprising" and "having" and any variations thereof in the specification and the claims of the present application and in the above description of drawings are intended to cover non-exclusive inclusion.

In the description of the examples of the present application, the technical terms such as "first" and "second" are only used for distinguishing between different objects, but cannot be understood as indicating or implying relative importance or implicitly indicating the number, specific order, or primary-secondary relationship of indicated technical features. In the description of the examples of the present application, the "plurality" means more than two, unless otherwise specifically defined.

Reference herein to an "example" means that a particular feature, structure, or characteristic described with reference to the example may be included in at least one example of the present application. The appearances of the phrase in various places in the specification neither necessarily refer to a same example, nor are independent or alternative examples mutually exclusive with other examples. It is explicitly and implicitly understood by those skilled in the art that the examples described herein may be combined with other examples.

In the description of the examples of the present application, the term "and/or" is only an association relationship for describing associated objects, indicating that three relationships may exist. For example, A and/or B may represent three situations: A exists alone, both A and B exist, and B exists alone. In addition, the character "/" herein generally means that there is an "or" relationship between associated objects therebefore and thereafter.

It is obvious for those skilled in the art to make various modifications and alterations in the present application without departing from the scope of protection of the present application. Therefore, the present application is intended to cover the modifications and alterations of the present application falling within corresponding claims (to-be-claimed scope of protection) and an equivalent scope thereof. It should be noted that the embodiments provided in the examples of the present application can be combined with each other on a non-conflict basis.

Before describing the scope of protection provided in the examples of the present application, in order to facilitate understanding of the examples of the present application, problems existing in relevant technologies are first specified in the present application:

Characterized by high power, being chargeable and dischargeable, and good cycling performance, batteries are widely used in electrical apparatuses, such as a vehicle. At present, requirements for the rate performance and power performance of the batteries are increasingly high on the market. However, in the relevant technologies, a battery at a high rate has high resistance, so that its power performance cannot meet the requirements. Therefore, it is in urgent need of developing a battery that can have both good rate performance and good power performance.

In view of this, the examples of the present application provide a battery cell, a battery, and an electrical apparatus. The battery cell can have both good rate performance and good power performance.

## Electrical apparatus

In the present application, the electrical apparatus may be, e.g., a mobile phone, a portable device, a notebook computer, a ship, a spacecraft, a vehicle, an electric toy, and an electric tool. The vehicle may be a fuel vehicle, a gas vehicle, or a new energy vehicle. The new energy vehicle may be, e.g., an all-electric vehicle, a hybrid electric vehicle, or an extended range electric vehicle. The spacecraft includes, e.g., an airplane, a rocket, a space shuttle, and a spaceship. The electric toy includes a fixed or mobile electric toy, such as a game machine, an electric toy car, an electric toy ship, and an electric toy plane. The electric tool includes an electric metal cutting tool, an electric grinding tool, an electric assembling tool, and an electric tool for railway, such as an electric drill, an electric grinding machine, an electric wrench, an electric screwdriver, an electric hammer, an electric impact drill, a concrete vibrator, and an electric planer. The above electrical apparatus is not specially limited in the examples of the present application.

For ease of description, the following examples are illustrated by taking an electrical apparatus in an example of the present application being a vehicle 1000 as an example.

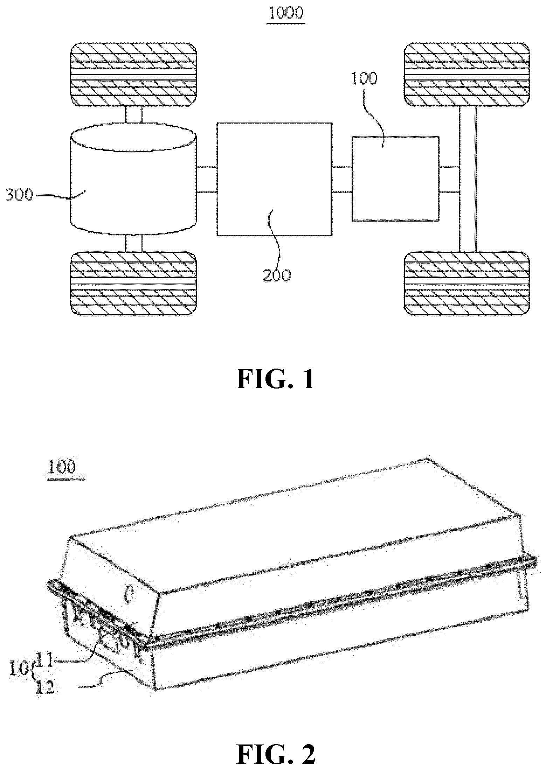

Referring to Fig. 1, Fig. 1 shows a schematic structural diagram of a vehicle provided in some examples of the present application.

As shown in Fig. 1, the vehicle 1000 may be a fuel vehicle, a gas vehicle, or a new energy vehicle. The new energy vehicle may be, e.g., a all-electric vehicle, a hybrid vehicle, or a extended range electric vehicle. A battery 100 is provided within the vehicle 1000, where the battery 100 may be provided at the bottom or head or tail of the vehicle 1000. The battery 100 can be used to power the vehicle 1000, for example, the battery 100 can serve as an operating power source for the vehicle 1000. The vehicle 1000 may further include a controller 200 and a motor 300, where the controller 200 is configured to control the battery 100 to power the motor 300, for example, serve to satisfy operating power demand when the vehicle 1000 is starting, navigating, and running.

In some examples of the present application, the battery 100 not only can serve as an operating power source of the vehicle 1000, but also can serve as a driving power source of the vehicle 1000, to provide driving power for the vehicle 1000 in place of or partially in place of fuel or natural gas.

## Battery

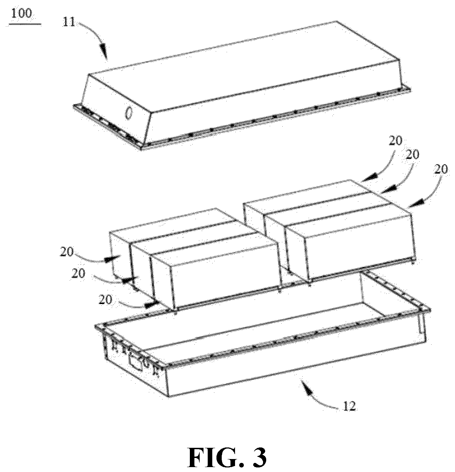

Referring to Fig. 2 and Fig. 3, Fig. 2 shows a schematic structural diagram of a battery provided in some examples of the present application. Fig. 3 shows a schematic diagram of an exploded structure of the battery in Fig. 2.

The battery 100 in the present application refers to a battery comprising at least one battery cell 20. As shown in Fig. 2 and Fig. 3, the battery 100 includes a box body 10 and a battery cell 20, where the battery cell 20 is accommodated within the box body 10.

The box body 10 is configured to provide an accommodating space for the battery cell 20, and the box body 10 may adopt various structures. In some examples, the box body 10 may include a first box body 11 and a second box body 12. The first box body 11 and the second box body 12 cover each other, such that the first box body 11 and the second box body 12 together define an accommodating space for accommodating the battery cell 20. The second box body 12 may be a hollow structure with one opening end, the first box body 11 may be a plate-like structure, and the first box body 11 covers on an opening side of the second box body 12, such that the first box body 11 and the second box body 12 together define the accommodating space; or the first box body 11 and the second box body 12 each may be a hollow structure with one opening side, and an opening side of the first box body 11 covers on the opening side of the second box body 12. Of course, the box body 10 formed by the first box body 11 and the second box body 12 may be of various shapes, such as a cylinder and a cuboid.

In the battery 100, there may be a plurality of battery cells 20, and there may be a series connection, or a parallel connection, or a parallel-series connection between the plurality of battery cells 20. The parallel-series connection means that there may be both the series connection and the parallel connection between the plurality of battery cells 20. The plurality of battery cells 20 can be directly connected together in series or in parallel or in parallel-series connection, and then the whole of the plurality of battery cells 20 is accommodated within the box body 10.

Each of the battery cells 20 may be a secondary battery cell or a primary battery; or may be, but is not limited to, e.g., a lithium-ion secondary battery cell, a sodium-ion secondary battery cell, a magnesium-ion secondary battery cell, or a potassium-ion secondary battery cell. The battery cell 20 may present a cylindrical, flat, or cuboid shape, or other shapes.

### Battery cell

An example of the present application provides a battery cell, comprising a positive electrode plate, a negative electrode plate, a separator, and an electrolyte solution. The positive electrode plate comprises a positive electrode current collector and a positive electrode active material layer arranged on at least one side of the positive electrode current collector. The negative electrode plate comprises a negative electrode current collector and a negative electrode active material layer arranged on at least one side of the negative electrode current collector. The separator is arranged between the positive electrode plate and the negative electrode plate. The positive electrode active material layer, the negative electrode active material layer, the separator, and the electrolyte solution satisfy a relationship of:

$$50\ \text{M}\Omega\cdot\text{cm}^2 \leq \frac{\frac{T1}{P1}+\frac{T2}{P2}+\frac{T3}{P3}}{G} \leq 300\ \text{M}\Omega\cdot\text{cm}^2$$

. T1 is a thickness of the positive electrode active material layer, in cm; and P1 is a porosity of the positive electrode active material layer. T2 is a thickness of the negative electrode active material layer, in cm; and P2 is a porosity of the negative electrode active material layer. T3 is a thickness of the separator, in cm; and P3 is a porosity of the separator. G is an ionic conductivity of the electrolyte solution at 25°C, in mS/cm.

The positive electrode current collector may be provided with a positive electrode active material layer on one surface, or may be provided with a positive electrode active material layer on each of two surfaces, or may be provided with a separator layer between a surface of the positive electrode current collector and the positive electrode active material layer, i.e., making the positive electrode active material not contact with the surface of the positive electrode current collector, which is not particularly defined here in the examples of the present application. The negative electrode current collector may be provided with a negative electrode active material layer on one surface, or may be provided with a negative electrode active material layer on each of two surfaces, or may be provided with a separator layer between a surface of the negative electrode current collector and the negative electrode active material layer, which is not particularly defined here in the examples of the present application.

In the present application, the thickness T1 of the positive electrode active material layer refers to a thickness of a single-sided positive electrode active material layer, and the thickness T2 of the negative electrode active material layer also refers to a thickness of a single-sided negative electrode active material layer.

The porosity refers to a percentage of internal pore volume of a material in its total volume, and can be tested according to the method of GB/T 24586-2009.

The ionic conductivity G of the electrolyte solution refers to a conductivity of the electrolyte solution at 25°C, which can be tested using a known method in the art, and using a test instrument, e.g., a LEICI conductivity meter.

In the battery cell provided in the example of the present application, the inventors unexpectedly find in an experiment that a real ion transmission path may not only be associated with the thickness of the active material layer and the thickness of the separator, but also be associated with the porosity of the active material layer and the porosity of the separator. Therefore, in the example of the present application, the real ion transmission path in each layer is closer to a ratio of the thickness of each layer to its porosity, i.e., the thickness T1 and the porosity P1 of the positive electrode active material layer, the thickness T2 and the porosity P2 of the negative electrode active material layer, the thickness T3 and the porosity P3 of the separator, and the ionic conductivity G of the electrolyte solution satisfy the above relationship, thereby contributing to ion transmission within the battery cell, making the battery cell have low resistance at a high rate, improving the power performance of the battery cell, and realizing both good rate performance and good power performance of the battery cell.

In some examples of the present application, the thickness T1 of the positive electrode active material layer satisfies: 0.0035 cm≤T1≤0.0055 cm.

In the above examples, the thickness T1 of the positive electrode active material layer set within the above appropriate range can shorten the ion transmission path within the positive electrode active material, to further reduce the resistance of the battery cell, thereby improving the power performance of the battery cell.

In some other examples of the present application, the thickness T1 of the positive electrode active material layer satisfies: 0.0035 cm≤T1≤0.0045 cm, thereby further shortening the ion transmission path within the positive electrode active material layer, to not only improve the power performance of the battery cell, but also improve the cycling performance of the battery cell.

In some examples, the thickness T1 of the positive electrode active material layer may be, but is not limited to, 0.0035 cm, 0.0036 cm, 0.0037 cm, 0.0038 cm, 0.0039 cm, 0.0040 cm, 0.0041 cm, 0.0042 cm, 0.0043 cm, 0.0044 cm, 0.0045 cm, 0.0046 cm, 0.0047 cm, 0.0048 cm, 0.0049 cm, 0.0050 cm, 0.0051 cm, 0.0052 cm, 0.0053 cm, 0. 0054 cm, and 0.0055 cm.

In some examples of the present application, the porosity P1 of the positive electrode active material layer satisfies: 30%≤P1≤60%.

In the above examples, the porosity P1 of the positive electrode active material layer set within the above appropriate range can contribute to the ion transmission within the positive electrode active material, to further reduce the resistance of the battery cell, thereby improving the power performance of the battery cell.

In some other examples of the present application, the porosity P1 of the positive electrode active material layer satisfies: 40%≤P1≤60%, to further increase the ion transmission rate within the positive electrode active material layer, and further reduce the resistance of the battery cell, thereby improving the power performance of the battery cell.

In some examples, the porosity P1 of the positive electrode active material layer may be, but is not be limited to, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, and 60%.

In some examples of the present application, the positive electrode active material layer comprises a positive electrode active material, and a BET specific surface area S1 of the positive electrode active material satisfies: 8 $m^2/g \leq S1 \leq 12\ m^2/g$.

The BET specific surface area has a well-known meaning in the art, may be tested using a specific surface area analysis and test method by nitrogen adsorption, and is computed using the BET (Brunauer Emmett Teller) method, where the specific surface area analysis and test by nitrogen adsorption may be carried out using Tri-Star II specific surface area and porosity analyzer of Micrometrics Instruments Corporation.

In the above examples, the BET specific surface area S1 of the positive electrode active material set within the above appropriate range not only can increase the ion transmission rate in the positive electrode active material layer to further improve the power performance of the battery cell, but also can reduce the contact area between the positive electrode active material and the electrolyte solution, and will decrease side reactions of the electrolyte solution on the surface of the positive electrode active material even at a high voltage or strong oxidability, thereby reducing the gas production and heat production, and improving the safety performance and cycling performance of the battery cell.

In some examples of the present application, the positive electrode active material may comprise the following materials or a combination thereof: a lithium-containing phosphate of olivine structure, a lithium transition metal oxide, and respective modified compound thereof. However, the present application is not limited to these materials, and other conventional materials useful as positive electrode active materials for batteries can also be used. These positive electrode active materials may be used alone or in combination of two or more thereof. Examples of lithium transition metal oxides may include, but are not limited to, a lithium cobalt oxide (e.g., $LiCoO_2$), a lithium nickel oxide (e.g., $LiNiO_2$), a lithium manganese oxide (e.g., $LiMnO_2$ or $LiMn_2O_4$), a lithium nickel cobalt oxide, a lithium manganese cobalt oxide, a lithium nickel manganese oxide, a lithium nickel cobalt manganese oxide (e.g., $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), $LiNi_{0.8}Co_{0.1}Mn_{0.1}O_2$ (NCM811 for short), a lithium nickel cobalt aluminum oxide (e.g., $LiNi_{0.85}Co_{0.15}Al_{0.05}O_2$), a modified oxide thereof, etc., or a combination thereof. Examples of the lithium-containing phosphate of olivine structure may include, but are not limited to, lithium iron phosphate (such as LiFePO (also referred to as LFP)), a composite material of lithium iron phosphate and carbon, lithium manganese phosphate (such as $LiMnPO_4$), a composite material of lithium manganese phosphate and carbon, lithium iron manganese phosphate, and a composite material of lithium manganese iron phosphate and carbon, or a combination thereof.

Further, in some examples of the present application, the positive electrode active material layer may further comprise a conductive agent and a binder. Types of the conductive agent and the binder in the positive electrode active material layer are not specifically limited in the examples of the present application, and may be selected based on actual requirements. As an example, the conductive agent may be, but is not limited to, one or more of graphite, superconducting carbon, acetylene black, carbon black, Ketjen black, carbon dot, carbon nanotube, graphene, and carbon nanofiber. The binder may be, but is not limited to, one or more of styrene butadiene rubber (SBR), water-based acrylic resin, carboxymethylcellulose (CMC), polyvinylidene fluoride (PVDF), polytetrafluoroethylene (PTFE), polyvinyl butyral (PVB), ethylene-vinyl acetate copolymer (EVA), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylic resin, and polyvinyl alcohol (PVA).

In some examples of the present application, a material such as a metal foil or a porous metal plate may be used as the positive electrode current collector. As an example, the material of the positive electrode current collector may be, but is not be limited to, a foil or a porous plate of a metal such as copper, nickel, titanium, or silver, or an alloy thereof. Further, in some specific examples of the present application, an aluminum foil is used as the positive electrode current collector.

The positive electrode plate of the examples of the present application may be prepared using a conventional method in the art, for example, the positive electrode active material, the conductive agent, and the binder at a certain mass ratio are mixed by sufficiently stirring in an appropriate amount of NMP to form a uniform positive electrode slurry; and the positive electrode slurry is coated on the surface of the positive electrode current collector aluminum foil, which is dried, cold pressed, and cut to provide the positive electrode plate.

In some examples of the present application, the thickness T2 of the negative electrode active material layer satisfies: 0.003 cm≤T2≤0.005 cm.

In the above examples, the thickness T2 of the negative electrode active material layer set within the above appropriate range can shorten the ion transmission path within the negative electrode active material layer to further reduce the resistance of the battery cell, thereby improving the power performance of the battery cell.

In some other examples of the present application, the thickness T2 of the negative electrode active material layer satisfies: 0.0035 cm≤T2≤0.005 cm.

In the above examples, the thickness T2 of the negative electrode active material set within the above appropriate range not only can reduce the resistance of the battery cell to improve the power performance of the battery cell, but also can improve the cycling performance of the battery cell.

In some examples, the thickness T2 of the negative electrode active material layer may be, but is not limited to, 0.003 cm, 0.0031 cm, 0.0032 cm, 0.0033 cm, 0.0034 cm, 0.0035 cm, 0.0036 cm, 0.0037 cm, 0.0038 cm, 0.0039 cm, 0.0040 cm, 0.0041 cm, 0.0042 cm, 0.0043 cm, 0.0044 cm, 0.0045 cm, 0.0046 cm, 0.0047 cm, 0.0048 cm, 0.0049 cm, and 0.0050 cm.

In some examples of the present application, the porosity P2 of the negative electrode active material layer satisfies: 30%≤P2≤60%.

In the above examples, the porosity P2 of the negative electrode active material layer set within the above appropriate range can contribute to the ion transmission within the negative electrode active material, to further reduce the resistance of the battery cell, thereby improving the power performance of the battery cell.

In some other examples of the present application, the porosity P2 of the negative electrode active material layer satisfies: 40%≤P2≤60%.

In the above examples, the porosity P2 of the negative electrode active material layer set within the above appropriate range can further increase the ion transmission rate within the negative electrode active material layer, thereby further improving the power performance of the battery cell.

In some examples, the porosity P2 of the negative electrode active material layer may be, but is not be limited to, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, and 60%.

In some examples of the present application, the negative electrode active material layer comprises a negative electrode active material, and a BET specific surface area S2 of the negative electrode active material satisfies: 1.7 $m^2/g \leq S2 \leq 2.2\ m^2/g$.

In the above examples, the BET specific surface area S2 of the negative electrode active material set within the above appropriate range can increase the ion transmission rate in the negative electrode active material layer, thereby further improving the power performance of the battery cell.

In some examples of the present application, the negative electrode active material may comprise natural graphite, artificial graphite, mesocarbon microbead (MCMB for short), hard carbon, soft carbon, silicon, silicon-carbon complex, Li-Sn alloy, Li-Sn-O alloy, Sn, SnO, $SnO_2$, lithiated $TiO_2$-$Li_4Ti_5O_{12}$ of spinel structure, Li-Al alloy, or a combination thereof.

Further, in some examples of the present application, the negative electrode active material layer may further comprise a conductive agent and a binder. Types of the conductive agent and the binder in the negative electrode active material layer are not specifically limited in the examples of the present application, and may be selected based on actual requirements.

As an example, the conductive agent may be, but is not limited to, one or more of graphite, superconducting carbon, acetylene black, carbon black, Ketjen black, carbon dot, carbon nanotube, graphene, and carbon nanofiber; and the binder may be, but is not limited to one or more of styrene butadiene rubber (SBR), polyvinylidene fluoride (PVDF), polytetrafluoroethylene (PTFE), polyvinyl butyral (PVB), water-based acrylic resin, and carboxymethyl cellulose (CMC).

In some examples of the present application, a material such as a metal foil or a porous metal plate may be used as the negative electrode current collector. As an example, the material of the negative electrode current collector may be, but is not be limited to, a foil or a porous plate of a metal such as copper, nickel, titanium, or iron, or an alloy thereof. Further, in some specific examples of the present application, a copper foil is used as the negative electrode current collector.

The negative electrode plate of the examples of the present application may be prepared using a conventional method in the art, for example, the negative electrode active material, the conductive agent, the binder, and a thickener at a certain mass ratio are dispersed in an appropriate amount of deionized water, a pore-forming agent is added, and the mixture is sufficiently stirred to form a uniformly dispersed negative electrode slurry; and the negative electrode slurry is coated on the surface of the negative electrode current collector copper foil, which is dried, cold pressed, and cut to provide the negative electrode plate.

In some examples of the present application, the thickness T3 of the separator satisfies: 0.0005 cm≤T3≤0.0015 cm.

In the above examples, the thickness T3 of the separator set within the above range can shorten the ion transmission path within the separator, to further reduce the resistance of the battery cell, thereby providing the power performance thereof.

In some examples, the thickness T3 of the separator may be, but not limited to, 0.0005 cm, 0.0006 cm, 0.0007 cm, 0.0008 cm, 0.0009 cm, 0.0010 cm, 0.0011 cm, 0.0012 cm, 0.0013 cm, 0.0014 cm, and 0.0015 cm.

In some examples of the present application, the porosity P3 of the separator satisfies: 30%≤P3≤80%.

In the above examples, the porosity P3 of the separator set within the above range can contribute to the ion transmission, increase the ion transmission rate, and then reduce the ions of the battery cell, thereby improving the power performance of the battery cell.

In some examples, the porosity P3 of the separator may be, but is not limited to, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, and 80%.

In some examples of the present application, a gas permeability of the separator is greater than or equal to 150 s/100 cm$^3$.

In the present application, a method for measuring the gas permeability of the separator is not particularly limited, and the gas permeability may be measured using a method commonly used in the art. A non-restrictive example of the method for measuring the gas permeability is as follows: a test sample is made into a size of 4 cm×4 cm in an environment at a temperature from 15°C to 28°C and a humidity of less than 80%, and a gas permeability value is directly measured using an air-permeability-tester according to Gurleytest (100 cc) method.

In the above examples, the gas permeability of the separator set within the above range can contribute to the ion transmission, increase the ion transmission rate, and then reduce the resistance of the battery cell, thereby improving the power performance of the battery cell.

In some examples of the present application, the separator may be selected from the group consisting of polyethylene (PE), polypropylene (PP), polyvinylidene fluoride (PVDF), aramid, polyethylene terephthalate (PET), polytetrafluoroethylene (PTFE), polyacrylonitrile (PAN), polyimide (PI), polyamide, polyester, and a natural fiber, or a combination thereof.

In some examples of the present application, an ionic conductivity G of the electrolyte solution at 25°C satisfies: 13 mS/cm≤G≤26 mS/cm.

In the above examples, the ionic conductivity G of the electrolyte solution at 25°C set within the above appropriate range can enhance the ion conductivity within the electrolyte solution, and further reduce the resistance of the battery cell, thereby further improving the power performance of the battery cell.

In some other examples of the present application, an ionic conductivity G of the electrolyte solution at 25°C satisfies: 14 mS/cm≤G≤25 mS/cm.

In the above examples, the ionic conductivity within the electrolyte solution can be further enhanced, to further reduce the resistance of the battery cell, thereby further improving the power performance of the battery cell.

In some examples, the ionic conductivity G of the electrolyte solution at 25°C may be, but is not limited to, 13 mS/cm, 14 mS/cm, 15 mS/cm, 16 mS/cm, 17 mS/cm, 18 mS/cm, 19 mS/cm, 20 mS/cm, 21 mS/cm, 22 mS/cm, 23 mS/cm, 24 mS/cm, 25 mS/cm, and 26 mS/cm.

In some examples of the present application, a liquid retention coefficient N of the electrolyte solution satisfies: 3 g/Ah≤N≤7 g/Ah.

In the present application, the liquid retention coefficient N refers to a ratio of a liquid retention amount of the electrolyte solution to a first cycle discharge capacity of the battery cell.

In the above examples, the liquid retention coefficient N of the electrolyte solution set within the above range not only can reduce the resistance of the battery cell to improve the power performance of the battery cell, but also can improve the cycling performance of the battery cell.

In some examples, the liquid retention coefficient N of the electrolyte solution may be, but is not limited to, 3 g/Ah, 4 g/Ah, 5 g/Ah, 6 g/Ah, and 7 g/Ah.

In some examples of the present application, the electrolyte solution comprises an electrolyte salt and an organic compound, and a viscosity μ of the organic compound satisfies: 0.1 mPa·s-3.5 mPa·s.

In the above examples, the viscosity of the organic compound may be tested with reference to GB/T 10247-2008 Methods of viscosity measurement, where a Bolefer (DV-2TLV) viscometer and a rotor No. 18 are used for testing at about 70 r/min. An organic compound with the electrolyte salt comprised in and the viscosity μ of the electrolyte solution satisfying the above relationship makes the electrolyte solution have a high conductivity, and then can reduce the resistance of the battery cell, thereby further improving the power performance of the battery cell.

In some examples of the present application, based on a mass of the electrolyte solution, a mass fraction A of the electrolyte salt satisfies: 10%≤A≤20%, and a mass fraction B of the organic compound satisfies 30%≤B≤70%.

In the above examples, the mass fraction A of the electrolyte salt and the mass fraction B of the organic compound set within the above appropriate range respectively can reduce the viscosity of the electrolyte solution, improve the conductivity of the electrolyte solution, and then reduce the resistance of the battery cell, thereby further improving the resistance of the battery cell.

In some examples of the present application, the electrolyte salt includes a lithium salt.

In some specific examples of the present application, the lithium salt is selected from the group consisting of lithium hexafluorophosphate ($LiPF_6$), lithium bis(fluorosulfonyl)imide (LiFSI), and lithium bis(trifluoromethanesulphonyl) imide (LiTFSI), or a combination thereof.

In some examples of the present application, the organic compound comprises a sulfone organic compound, an ether organic compound, an ester organic compound, and a nitrile organic compound, or a combination thereof.

For example, the sulfone organic compound is selected from dimethyl sulfoxide (DMSO). The ether organic compound is selected from glycol dimethyl ether (DME). The ester organic compound is selected from the group consisting of methyl formate (MF), ethyl formate, methyl acetate (MA), ethyl acetate (EA), methyl acrylate, or a combination thereof. The nitrle organic compound is selected from acetonitrile (AN).

In some examples of the present application, the electrolyte solution further comprises a high temperature additive, and based on the mass of the electrolyte solution, a mass fraction C of the high temperature additive satisfies: 0.01%≤C≤1%.

In the above examples, the high temperature additive and the content thereof can contribute to forming a protective layer on a surface of an electrode plate, where the protective layer can be stable at a high temperature, and then contribute to protecting the electrode plate, so that the battery cell has good high temperature performance.

In some examples of the present application, the high temperature additive is selected from the group consisting of lithium tetrafluoroborate ($LiBF_4$), lithium difluorophosphate ($LiPO_2F_2$), lithium fluorosulfonate ($LiFSO_3$), lithium sulphamate ($LiH_2NO_3S$), or a combination thereof. The above high temperature additive can contribute to forming an inorganic protective layer to improve the mechanical strength of the protective layer, thereby further improving the high temperature performance of the battery.

In some examples of the present application, the electrolyte solution further comprises a film forming additive, and based on the mass of the electrolyte solution, a mass fraction D of the film forming additive satisfies: 1%≤D≤5%.

In the above examples, the film forming additive and the content thereof can contribute to improving the interfacial film stability, thereby improving the cycling performance of the battery cell.

In some examples of the present application, the film forming additive is selected from the group consisting of vinylene carbonate, fluoroethylene carbonate, vinylethylene carbonate, or a combination thereof.

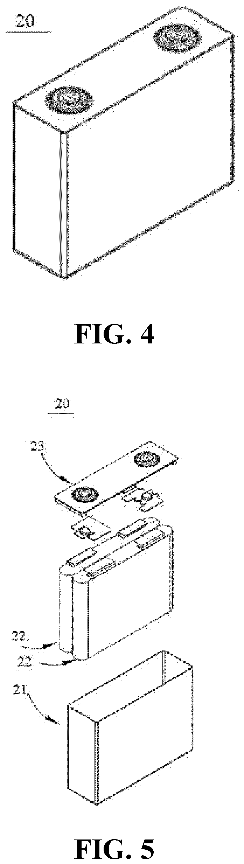

Fig. 4 is a battery cell as an example, and Fig. 5 shows a schematic diagram of an exploded structure of the battery cell in Fig. 4.

As shown in Fig. 4 and Fig. 5, the battery cell 20 includes a case 21, an electrode assembly 22, and a cover body assembly 23. The case 21 has a chamber accommodating the electrode assembly 22, and the cover body assembly 23 is configured to seal an opening of the case 21. The cover body assembly 23 comprises an end cover that is connected to the case 21 to form a shell of the battery cell 20. The electrode assembly 22 is provided within the case 21, and the case 21 is filled with an electrolyte.

The end cover refers to a component that covers on the opening of the case 21 to isolate an internal environment of the battery cell 20 from an external environment. Non-restrictively, the shape of the end cover may be adapted to the shape of the case 21 to fit with the case 21. Optionally, the end cover can be made of a material (such as an aluminum alloy) with certain hardness and strength, so that the end cover can hardly deform when being squeezed and collided, and so that the battery cell 20 not only can have higher structural strength, but also can have improved safety performance. A functional component such as an electrode terminal may be provided on the end cover. The electrode terminal may be configured to electrically connect to the electrode assembly 22, for outputting or inputting electrical energy of the battery cell 20. In some examples, the end cover may also be provided with a pressure relief mechanism configured to relieve an internal pressure when the internal pressure or temperature of the battery cell 20 reaches a threshold. The end cover may also be made of a plurality of materials, such as copper, iron, aluminum, stainless steel, aluminum alloy, and plastic, which is not specially limited in the examples of the present application. In some examples, an insulating member may be further provided on an inner side of the end cover. The insulating member may be configured to isolate an electrically connecting component within the case 21 from the end cover to reduce a short-circuit risk. As an example, the insulating member may be made of plastic, rubber, etc.

The case 21 is an assembly configured to fit with the end cover to form the internal environment of the battery cell 20, where the formed internal environment may be used to accommodate the electrode assembly 22, the electrolyte, and other components. The case 21 and the end cover may be separate components, and an opening may be provided on the case 21, such that the end cover covers on the opening to form the internal environment of the battery cell 20. Non-restrictively, the end cover and the case 21 may also be integrated. Specifically, the end cover and the case 21 may first form a common connection surface before other components enter the case, and when the inside of the case 21 is to be encapsulated, the end cover covers the case 21. The case 21 may be of various shapes and sizes, such as a cuboid shape, a cylindrical shape, or a hexagonal prism.

The electrode assembly 22 is a component in the battery cell 20 where an electrochemical reaction occurs. The case 21 may comprise one or more electrode assemblies 22 therein. The electrode assembly 22 is mainly formed by winding or stacking of a positive electrode plate and a negative electrode plate, and a separator is generally provided between the positive electrode plate and the negative electrode plate. Parts of the positive electrode plate and the negative electrode plate having active materials constitute a main body part of the electrode assembly 22, and parts of the positive electrode plate and the negative electrode plate having no active material each form a tab. The positive tab and the negative tab may be located at one end of the main body part together or located at each end of the main body part respectively. In charging and discharging process of the battery, the positive electrode active material and the negative electrode active material react with the electrolyte solution, and the tab is connected to the electrode terminal to form a current circuit.

The battery cell provided in the examples of the present application may be prepared using a conventional method. For example, the following preparation method may be used: the positive electrode active material, the conductive agent, the binder are dispersed in a solvent (e.g., N-methylpyrrolidone, NMP for short) to form a uniform positive electrode slurry, and the positive electrode slurry is coated on two opposite surfaces of the positive electrode current collector, which is dried, cold pressed, and cut to obtain the positive electrode plate; the negative electrode active material, the conductive agent, the binder, and the thickener are dispersed in a solvent (e.g., deionized water), then a pore-forming agent is added, the mixture is stirred to obtain a uniformly dispersed negative electrode slurry, and the negative electrode slurry is coated on two opposite surfaces of the negative electrode current collector, which is dried, cold pressed, and cut to obtain the negative electrode plate; the positive electrode plate, the separator, and the negative electrode plate are sequentially stacked to obtain the electrode assembly, or sequentially stacked and winded to obtain the electrode assembly; the electrode assembly is transferred into the case, the electrolyte solution is injected, the case is encapsulated, the electrolyte solution is re-injected into the case, and the case is re-encapsulated, to provide the battery cell after high temperature standing, formation, and capacity grading.

The following examples describe the disclosure of the present application in more detail and are provided for illustrative purposes only, as various modifications and alterations within the scope of the disclosure of the present application will be apparent to those skilled in the art. All reagents used in the examples are commercially available or can be synthesized according to conventional methods, and can be directly used without further treatment; and the instruments used in the examples are all commercially available.

**Example 1**

Preparation of a positive electrode plate

The lithium iron phosphate (LFP) of olivine structure, polyvinylidene fluoride (PVDF), and carbon black (SP) at a mass ratio of 97:2:1 were mixed with a solvent, and the mixture was stirred to obtain a uniformly dispersed positive electrode slurry, which was uniformly coated on two surfaces of an aluminum foil. The aluminum foil was dried, cold pressed, and cut to provide the positive electrode plate.

Preparation of a negative electrode plate

Artificial graphite, carbon black (SP), styrene butadiene rubber (SBR), and sodium hydroxymethylcellulose (CMC) at 97:0.5:1.5:1 were mixed with a solvent, a pore-forming agent was added, the mixture was stirred to obtain a uniformly dispersed negative electrode slurry, and the negative electrode slurry was uniformly coated on two surfaces of a copper foil, which was dried, cold pressed, and cut to provide the negative electrode plate.

Preparation of an electrolyte solution

In an argon atmosphere within a glove box ($H_2O$<0.1 ppm, $O_2$<0.1 ppm), based on mass fraction, 30% ethylene carbonate (EC), 15% dimethyl carbonate (DMC), 40% ethylene glycol dimethyl ether (DME), and 15% lithium hexa-fluorophosphate ($LiPF_6$) were mixed to provide the electrolyte solution.

Separator

A polyethylene film was used as the separator.

Preparation of a battery cell:

The positive electrode plate, the negative electrode plate, and the separator were made into an electrode assembly through a winding process or a stacking process, the electrode assembly was transferred into a case composed of an aluminum shell and an aluminum-plastic film, and then the electrolyte solution was injected into the case, which was encapsulated, to provide the battery cell after high temperature standing, formation, and capacity grading.

Examples 2-28 and Comparative Example 1

The preparation methods in Examples 2-28 and Comparative Example 1 are similar to the preparation method in Example 1, except for those shown in Table 1 and Table 2

Testing

(1) Testing for T1, T2, and T3

The battery cell was discharged to 2.5V at a rate of 0.1C, and then disassembled to obtain the positive electrode plate, the negative electrode plate, and the separator. At normal temperature, the positive electrode plate, the negative electrode plate, and the separator were left to stand still in a dry environment (humidity$\leq$2%) for 24 h to volatilize the electrolyte solution. A middle broken positive electrode plate was measured with a spiral micrometer to obtain a thickness at a middle position of the positive electrode plate, and then a thickness at a next point was measured, until thickness data at 50 points was collected, to obtain an average value T1'. Further, a thickness T0 of the current collector was measured. If the positive electrode plate was single-sided coated, T1=T1'-T0; and if the positive electrode was double-sided coated, T1=(T1'-T0)/2. The test method of T2 is same as the test method of T1.

A middle broken separator was measured with a spiral micrometer to obtain a thickness at a middle position of the separator, and a thickness at a next point was measured, until thickness data at 50 points were collected, to obtain an average value T3.

(2) Testing for P1, P2, and P3

The test was performed according to GB/T 24586-2009.

(3) Testing for G

The ionic conductivity of the electrolyte solution was tested using a LEICI conductivity meter at 25°C.

(4) Testing for BET specific surface area

The test was performed with reference to GB/T 19587-2004 Determination of the specific surface area of solids by gas adsorption-BET method, where the BET of the positive electrode plate was tested to be 10 $m^2$/g, and the BET of the negative electrode plate was tested to be 1.9 $m^2$/g in the examples and comparative examples.

(5) Testing for gas permeability

A test sample was made into a size of 4 cm$\times$4 cm in an environment at a temperature from 15°C to 28°C and a humidity of less than 80%, and a gas permeability value was directly measured using an air-permeability-tester according to Gurleytest (100 cc) method. The gas permeability was tested to be 150 s/100 $cm^3$ in the examples and comparative examples.

(6) Testing for discharge capacity retention rate at 10C

At room temperature of 25°C$\pm$2°C, the battery cell was charged to 3.65V at a constant current of 0.3C, then charged to a current of 0.05C at a constant voltage, left to stand still for 10 min; and discharged to 2.5V at a constant current of 0.3C, to obtain a discharge capacity D1. Then, the battery cell was charged to 3.65V at a constant current of 0.3C, charged to a current of 0.05C at a constant voltage, left to stand still for 10 min, and discharged to 2.5V at a constant current of 10C, to obtain a discharge capacity D2. Discharge capacity retention rate at 10C=D2/D1.

(7) Testing for capacity retention rate

At room temperature of 25°C±2°C, the battery cell was charged to 3.65V at a constant current of 5C, then charged to a current of 0.05C at a constant voltage, left to stand still for 10 min; discharged to 2.5V at a constant current of 3C, to obtain a discharge capacity Q1, and left to stand still for 10 min. The above step was repeated 500 times, the last discharge capacity was denoted as Q2, and the battery cell capacity retention rate=Q2/Q1.

(8) Testing for liquid retention coefficient N

A to-be-disassembled battery cell was weighed to obtain $M_1$. The battery cell was disassembled to pour out the free electrolyte solution, dimethyl carbonate (DMC) was added into the case for extraction 3 times, the DMC residual mixture was poured out, the components such as the electrode assembly and the case were transferred into a drying oven to fully remove the DMC, and the residue was weighed to obtain $M_2$. If a liquid retention amount is equal to $M_1-M_2$, the liquid retention coefficient N of the electrolyte solution is equal to $(M_1-M_2)/Q1$.

Table 1 and Table 2 provide some parameters of the battery cell in Examples 1-28 and Comparative Example 1, respectively, where Z in Table 1 represents $\dfrac{\frac{T1}{P1}+\frac{T2}{P2}+\frac{T3}{P3}}{G}$, and Table 3 provides test results of the battery cell in Examples 1-28 and Comparative Example 1.

Table 1

| Serial No. | T1 (cm) | P1 | T2 (cm) | P2 | T3 (cm) | P3 | G (mS/cm) | Z (MΩ) |
|---|---|---|---|---|---|---|---|---|
| Example 1 | 0.0045 | 40% | 0.0035 | 40% | 0.0012 | 40% | 16.0 | 143.8 |
| Example 2 | 0.0045 | 40% | 0.0035 | 40% | 0.0012 | 40% | 16.9 | 136.3 |
| Example 3 | 0.0045 | 40% | 0.0035 | 40% | 0.0012 | 40% | 16.9 | 136.3 |
| Example 4 | 0.0045 | 40% | 0.0035 | 40% | 0.0012 | 40% | 16.9 | 136.3 |
| Example 5 | 0.0045 | 40% | 0.0035 | 40% | 0.0012 | 40% | 16.9 | 136.4 |
| Example 6 | 0.0045 | 40% | 0.0035 | 40% | 0.0012 | 40% | 16.9 | 136.4 |
| Example 7 | 0.0045 | 40% | 0.0035 | 40% | 0.0012 | 40% | 16.9 | 136.4 |
| Example 8 | 0.0045 | 40% | 0.0035 | 40% | 0.0012 | 40% | 17.1 | 134.2 |
| Example 9 | 0.0045 | 40% | 0.0035 | 40% | 0.0012 | 40% | 16.9 | 136.2 |
| Example 10 | 0.0045 | 40% | 0.0035 | 40% | 0.0012 | 40% | 25.1 | 91.5 |
| Example 11 | 0.0045 | 40% | 0.0035 | 40% | 0.0012 | 40% | 16.6 | 138.2 |
| Example 12 | 0.0045 | 40% | 0.0035 | 40% | 0.0012 | 40% | 17.1 | 134.4 |
| Example 13 | 0.0045 | 40% | 0.0035 | 40% | 0.0012 | 40% | 14.3 | 160.8 |
| Example 14 | 0.0045 | 40% | 0.0035 | 40% | 0.0012 | 40% | 17.6 | 130.7 |
| Example 15 | 0.0035 | 40% | 0.0035 | 40% | 0.0012 | 40% | 16.9 | 121.6 |
| Example 16 | 0.0055 | 40% | 0.0035 | 40% | 0.0012 | 40% | 16.9 | 151.2 |
| Example 17 | 0.0045 | 30% | 0.0035 | 40% | 0.0012 | 40% | 16.9 | 158.7 |
| Example 18 | 0.0045 | 60% | 0.0035 | 40% | 0.0012 | 40% | 16.9 | 114.2 |
| Example 19 | 0.0045 | 40% | 0.0030 | 40% | 0.0012 | 40% | 16.9 | 129.0 |
| Example 20 | 0.0045 | 40% | 0.0050 | 40% | 0.0012 | 40% | 16.9 | 158.7 |
| Example 21 | 0.0045 | 40% | 0.0050 | 30% | 0.0012 | 40% | 16.9 | 183.4 |
| Example 22 | 0.0045 | 40% | 0.0050 | 60% | 0.0012 | 40% | 16.9 | 133.9 |
| Example 23 | 0.0045 | 40% | 0.0050 | 40% | 0.0005 | 40% | 16.9 | 148.3 |
| Example 24 | 0.0045 | 40% | 0.0035 | 40% | 0.0015 | 40% | 16.9 | 140.9 |
| Example 25 | 0.0045 | 40% | 0.0035 | 40% | 0.0012 | 30% | 16.9 | 142.3 |

(continued)

| Serial No. | T1 (cm) | P1 | T2 (cm) | P2 | T3 (cm) | P3 | G (mS/cm) | Z (MΩ) |
|---|---|---|---|---|---|---|---|---|
| Example 26 | 0.0045 | 40% | 0.0035 | 40% | 0.0012 | 80% | 16.9 | 127.5 |
| Example 27 | 0.0045 | 60% | 0.0035 | 60% | 0.0012 | 70% | 17.1 | 88.1 |
| Example 28 | 0.0055 | 30% | 0.0050 | 30% | 0.0015 | 30% | 13.5 | 297.2 |
| Comparative Example 1 | 0.0045 | 40% | 0.0035 | 40% | 0.0012 | 40% | 10.8 | 213.0 |

Table 2

| Serial No. | Each component of the electrolyte solution and content thereof | | | | | | | | | | | | |
|---|---|---|---|---|---|---|---|---|---|---|---|---|---|
| | EC | DMC | EMC | MF | MA | DMSO | VC | FEC | VEC | LiBF 4 | LiPO$_2$F$_2$ | LiFSO$_3$ | LiPF 6 |
| Example 1 | 30 % | 15 % | | | | | | | | | | | 15% |
| Example 2 | 30 % | 13 % | | | | | 2% | | | | | | 15% |
| Example 3 | 30 % | 13 % | | | | | | 2% | | | | | 15% |
| Example 4 | 30 % | 13 % | | | | | | | 2% | | | | 15% |
| Example 5 | 30 % | 13 % | | | | | 2% | | | 0.5% | | | 15% |
| Example 6 | 30 % | 13 % | | | | | 2% | | | | 0.5% | | 15% |
| Example 7 | 30 % | 13 % | | | | | 2% | | | | | 0.5% | 15% |
| Example 8 | 30 % | 13 % | | 40 % | | | 2% | | | | 0.5% | | 15% |
| Example 9 | 30 % | 13 % | | | 40 % | | 2% | | | | 0.5% | | 15% |
| Example 10 | 30 % | 13 % | | | | 40% | 2% | | | | 0.5% | | 15% |
| Example 11 | 30 % | 23 % | | | | | 2% | | | | 0.5% | | 15% |
| Example 12 | 30 % | 1% | | | | | 2% | | | | 0.5% | | 15% |
| Example 13 | 30 % | 18 % | | | | | 2% | | | | 0.5% | | 10% |
| Example 14 | 30 % | 8% | | | | | 2% | | | | 0.5% | | 20% |
| Example 15 | 30 % | 13 % | | | | | 2% | | | | 0.5% | | 15% |
| Example 16 | 30 % | 13 % | | | | | 2% | | | | 0.5% | | 15% |
| Example 17 | 30 % | 13 % | | | | | 2% | | | | 0.5% | | 15% |
| Example 18 | 30 % | 13 % | | | | | 2% | | | | 0.5% | | 15% |

(continued)

| Serial No. | Each component of the electrolyte solution and content thereof | | | | | | | | | | | | |
|---|---|---|---|---|---|---|---|---|---|---|---|---|---|
| | EC | DMC | EMC | MF | MA | DMSO | VC | FEC | VEC | LiBF 4 | LiPO$_2$F$_2$ | LiFSO$_3$ | LiPF 6 |
| Example 19 | 30 % | 13 % | | | | | 2% | | | | 0.5% | | 15% |
| Example 20 | 30 % | 13 % | | | | | 2% | | | | 0.5% | | 15% |
| Example 21 | 30 % | 13 % | | | | | 2% | | | | 0.5% | | 15% |
| Example 22 | 30 % | 13 % | | | | | 2% | | | | 0.5% | | 15% |
| Example 23 | 30 % | 13 % | | | | | 2% | | | | 0.5% | | 15% |
| Example 24 | 30 % | 13 % | | | | | 2% | | | | 0.5% | | 15% |
| Example 25 | 30 % | 13 % | | | | | 2% | | | | 0.5% | | 15% |
| Example 26 | 30 % | 13 % | | | | | 2% | | | | 0.5% | | 15% |
| Example 27 | 30 % | 3% | | | | | 2% | | | | 0.5% | | 15% |
| Example 28 | 23 % | 30 % | | | | | 2% | | | | 0.5% | | 15% |
| Comparative Example 1 | 30 % | 35 % | 20 % | | | | | | | | | | 15% |

Table 3

| Serial No. | Discharge capacity retention rate at 10C (%) | Capacity retention rate (25 °C, 500 times) |
|---|---|---|
| Example 1 | 91.2% | 82.1% |
| Example 2 | 90.9% | 95.6% |
| Example 3 | 91.4% | 95.7% |
| Example 4 | 91.6% | 95.7% |
| Example 5 | 91.4% | 96.1% |
| Example 6 | 91.5% | 96.3% |
| Example 7 | 91.5% | 96.2% |
| Example 8 | 91.6% | 96.7% |
| Example 9 | 91.4% | 96.6% |
| Example 10 | 95.9% | 98.9% |
| Example 11 | 91.3% | 95.9% |
| Example 12 | 91.5% | 96.2% |
| Example 13 | 90.0% | 95.4% |
| Example 14 | 91.8% | 96.3% |
| Example 15 | 92.5% | 96.7% |
| Example 16 | 90.5% | 95.6% |

(continued)

| Serial No. | Discharge capacity retention rate at 10C (%) | Capacity retention rate (25 °C, 500 times) |
|---|---|---|
| Example 17 | 90.1% | 95.4% |
| Example 18 | 93.2% | 97.0% |
| Example 19 | 91.9% | 96.4% |
| Example 20 | 90.1% | 95.4% |
| Example 21 | 89.1% | 94.9% |
| Example 22 | 91.6% | 96.2% |
| Example 23 | 90.7% | 95.7% |
| Example 24 | 91.1% | 95.9% |
| Example 25 | 91.0% | 95.9% |
| Example 26 | 92.0% | 96.4% |
| Example 27 | 96.4% | 98.7% |
| Example 28 | 86.5% | 93.5% |
| Comparative Example 1 | 45.7% | 64.3% |

As can be seen from Table 1, in the battery cell provided in examples of the present application, the thickness T1 and the porosity P1 of the positive electrode active material layer, the thickness T2 and the porosity P2 of the negative electrode active material layer, the thickness T3 and the porosity P3 of the separator, and the ionic conductivity G of the electrolyte solution satisfy the above relationship, so that the battery cell has low resistance at a high rate, thereby improving the power performance of the battery cell, and realizing both good rate performance and good power performance of the battery cell.

While the present application has been described with reference to the preferred examples, various modifications may be made and equivalents may be substituted for components thereof without departing from the scope of the present application. In particular, as long as there is no structural conflict, the technical features mentioned in the examples may be combined in any manner. The present application is not limited to the specific examples disclosed herein, but rather includes all examples falling within the scope of the claims.

## Claims

1. A battery cell, comprising:

    a positive electrode plate comprising a positive electrode current collector and a positive electrode active material layer arranged on at least one side of the positive electrode current collector;
    a negative electrode plate comprising a negative electrode current collector and a negative electrode active material layer arranged on at least one side of the negative electrode current collector;
    a separator arranged between the positive electrode plate and the negative electrode plate; and
    an electrolyte solution;
    wherein the positive electrode active material layer, the negative electrode active material layer, the separator, and the electrolyte solution satisfy a relationship of: $50 \text{ M}\Omega \cdot \text{cm}^2 \leq \frac{\frac{T1}{P1}+\frac{T2}{P2}+\frac{T3}{P3}}{G} \leq 300 \text{ M}\Omega \cdot \text{cm}^2$;
    wherein T1 is a thickness of the positive electrode active material layer, in cm; and P1 is a porosity of the positive electrode active material layer;
    T2 is a thickness of the negative electrode active material layer, in cm; and P2 is a porosity of the negative electrode active material layer;
    T3 is a thickness of the separator, in cm; and P3 is a porosity of the separator; and
    G is an ionic conductivity of the electrolyte solution at 25°C, in mS/cm.

2. The battery cell according to claim 1, wherein the thickness T1 of the positive electrode active material layer satisfies: 0.0035 cm≤T1≤0.0055 cm; and optionally, 0.0035 cm≤T1≤0.0045 cm.

3. The battery cell according to claim 1 or 2, wherein the porosity P1 of the positive electrode active material layer satisfies: $30\% \leq P1 \leq 60\%$; and optionally $40\% \leq P1 \leq 60\%$.

4. The battery cell according to any one of claims 1 to 3, wherein the positive electrode active material layer comprises a positive electrode active material, and a BET specific surface area S1 of the positive electrode active material satisfies: $8\ m^2/g \leq S1 \leq 12\ m^2/g$.

5. The battery cell according to any one of claims 1-4, wherein a thickness T2 of the negative electrode active material layer satisfies: $0.003\ cm \leq T2 \leq 0.005\ cm$; and optionally, $0.0035\ cm \leq T2 \leq 0.005\ cm$.

6. The battery cell according to any one of claims 1-5, wherein the porosity P2 of the negative electrode active material layer satisfies: $30\% \leq P2 \leq 60\%$; and optionally $40\% \leq P2 \leq 60\%$.

7. The battery cell according to any one of claims 1 to 6, wherein the negative electrode active material layer comprises a negative electrode active material, and a BET specific surface area S2 of the negative electrode active material satisfies: $1.7\ m^2/g \leq S2 \leq 2.2\ m^2/g$.

8. The battery cell according to any one of claims 1 to 7, wherein the thickness T3 of the separator satisfies: $0.0005\ cm \leq T3 \leq 0.0015\ cm$.

9. The battery cell according to any one of claims 1 to 8, wherein the porosity P3 of the separator satisfies: $30\% \leq P3 \leq 80\%$.

10. The battery cell according to any one of claims 1 to 9, wherein a gas permeability of the separator is greater than or equal to $150\ s/100\ cm^3$.

11. The battery cell according to any one of claims 1 to 10, wherein the ionic conductivity G of the electrolyte solution at 25°C satisfies: $13\ mS/cm \leq G \leq 26\ mS/cm$; and optionally, $14\ mS/cm \leq G \leq 25\ mS/cm$.

12. The battery cell according to any one of claims 1 to 11, wherein a liquid retention coefficient N of the electrolyte solution satisfies: $3\ g/Ah \leq N \leq 7\ g/Ah$.

13. The battery cell according to any one of claims 1 to 12, wherein the electrolyte solution comprises an electrolyte salt and an organic compound, and a viscosity $\mu$ of the organic compound satisfies: $0.1\ mPa{\cdot}s$-$3.5\ mPa{\cdot}s$.

14. The battery cell according to claim 13, wherein based on a mass of the electrolyte solution, a mass fraction A of the electrolyte salt satisfies: $10\% \leq A \leq 20\%$, and a mass fraction B of the organic compound satisfies $30\% \leq B \leq 70\%$.

15. The battery cell according to claim 13 or 14, wherein the electrolyte salt comprises a lithium salt; and
optionally, the lithium salt is selected from the group consisting of lithium hexafluorophosphate, lithium bis(fluorosulfonyl)imide, and lithium bis(trifluoromethanesulphonyl)imide, or a combination thereof.

16. The battery cell according to any one of claims 13-15, wherein the organic compound comprises a sulfone organic compound, an ether organic compound, an ester organic compound, and a nitrile organic compound;

    optionally, the sulfone organic compound is selected from dimethyl sulfoxide;
    optionally, the ether organic compound is selected from glycol dimethyl ether;
    optionally, the ester organic compound is selected from the group consisting of methyl formate, ethyl formate, methyl acetate, ethyl acetate, methyl acrylate, or a combination thereof; and
    optionally, the nitrle organic compound is selected from acetonitrile.

17. The battery cell according to any one of claims 11-16, wherein the electrolyte solution further comprises a high temperature additive, and based on the mass of the electrolyte solution, a mass fraction C of the high temperature additive satisfies: $0.01\% \leq C \leq 1\%$.

18. The battery cell according to claim 17, wherein the high temperature additive is selected from the group consisting of lithium tetrafluoroborate, lithium difluorophosphate, lithium fluorosulfonate, lithium sulphamate, or a combination thereof.

19. The battery cell according to any one of claims 11 to 18, wherein the electrolyte solution further comprises a film forming additive, and based on the mass of the electrolyte solution, a mass fraction D of the film forming additive satisfies: $1\% \leq D \leq 5\%$.

20. The battery cell according to claim 19, wherein the film forming additive is selected from the group consisting of vinylene carbonate, fluoroethylene carbonate, vinylethylene carbonate, or a combination thereof.

21. A battery, comprising the battery cell according to any one of claims 1 to 20.

22. An electrical apparatus, comprising the battery cell according to any one of claims 1 to 20 or the battery according to claim 21.

1000

# FIG. 1

100

# FIG. 2

**FIG. 3**

**FIG. 4**

**FIG. 5**

## INTERNATIONAL SEARCH REPORT

| International application No. |
| --- |
| **PCT/CN2022/125523** |

**A. CLASSIFICATION OF SUBJECT MATTER**

H01M4/13(2010.01)i; H01M10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 负极, 阳极, 正极, 阴极, 厚度, 孔隙率, 空隙率, 离子电导率, 比表面积, batter+, cell?, negative, electrode, anode, positive, cathode, thickness, porosity, ion, conductivity, specific, surface, area, BET

**C. DOCUMENTS CONSIDERED TO BE RELEVANT**

| Category* | Citation of document, with indication, where appropriate, of the relevant passages | Relevant to claim No. |
| --- | --- | --- |
| X | CN 103891028 A (ASAHI KASEI CORP.) 25 June 2014 (2014-06-25) description, paragraphs 64-389 | 1-22 |
| A | CN 112602224 A (ASAHI KASEI CORP.) 02 April 2021 (2021-04-02) entire document | 1-22 |
| A | JP 2009123497 A (SONY CORP.) 04 June 2009 (2009-06-04) entire document | 1-22 |
| A | JP 2015088465 A (HITACHI MAXELL) 07 May 2015 (2015-05-07) entire document | 1-22 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**08 June 2023** | Date of mailing of the international search report<br><br>**15 June 2023** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br>Telephone No. |

Form PCT/ISA/210 (second sheet) (July 2022)

International application No.

**PCT/CN2022/125523**

| Patent document cited in search report | | | Publication date (day/month/year) | Patent family member(s) | | | Publication date (day/month/year) |
|---|---|---|---|---|---|---|---|
| CN | 103891028 | A | 25 June 2014 | US | 2014255796 | A1 | 11 September 2014 |
| | | | | US | 10644353 | B2 | 05 May 2020 |
| | | | | WO | 2013062056 | A1 | 02 May 2013 |
| | | | | EP | 2772981 | A1 | 03 September 2014 |
| | | | | EP | 2772981 | A4 | 08 April 2015 |
| | | | | EP | 2772981 | B1 | 21 October 2020 |
| | | | | KR | 20140072105 | A | 12 June 2014 |
| | | | | KR | 101551135 | B1 | 07 September 2015 |
| | | | | JP | 2017054822 | A | 16 March 2017 |
| | | | | JP | 6427544 | B2 | 21 November 2018 |
| | | | | JPWO | 2013062056 | A1 | 02 April 2015 |
| | | | | JP | 6120772 | B2 | 26 April 2017 |
| | | | | TW | 201322528 | A | 01 June 2013 |
| | | | | TWI | 472083 | B | 01 February 2015 |
| CN | 112602224 | A | 02 April 2021 | KR | 20210011427 | A | 01 February 2021 |
| | | | | KR | 102524284 | B1 | 24 April 2023 |
| | | | | US | 2021351437 | A1 | 11 November 2021 |
| | | | | EP | 3836280 | A1 | 16 June 2021 |
| | | | | EP | 3836280 | A4 | 27 October 2021 |
| | | | | WO | 2020054866 | A1 | 19 March 2020 |
| | | | | JPWO | 2020054866 | A1 | 18 March 2021 |
| | | | | JP | 7019063 | B2 | 14 February 2022 |
| JP | 2009123497 | A | 04 June 2009 | None | | | |
| JP | 2015088465 | A | 07 May 2015 | None | | | |

Form PCT/ISA/210 (patent family annex) (July 2022)